Europäisches Patentamt

European Patent Office

Office européen des brevets

(11) Veröffentlichungsnummer: **0 122 409**
**B1**

# EUROPÄISCHE PATENTSCHRIFT

(45) Veröffentlichungstag der Patentschrift:
22.04.87

(51) Int. Cl.⁴: **F 24 D 19/10**

(21) Anmeldenummer: **84101901.1**

(22) Anmeldetag: **23.02.84**

(54) Thermostatisch geregelter Stellantrieb.

(30) Priorität: **17.03.83 DE 3309586**

(43) Veröffentlichungstag der Anmeldung:
**24.10.84 Patentblatt 84/43**

(45) Bekanntmachung des Hinweises auf die Patenterteilung:
**22.04.87 Patentblatt 87/17**

(84) Benannte Vertragsstaaten:
**AT BE DE FR GB IT NL SE**

(56) Entgegenhaltungen:
**CH - A - 551 654**
**DE - A - 2 543 163**
**GB - A - 1 430 975**

**ZEITSCHRIFT - HEIZUNGS, LÜFTUNG/KLIMATECHNIK,**
**HAUSTECHNIK, Band 34, Nr. 6, 1983 Seiten 266-271**

(73) Patentinhaber: **Behr-Thomson Dehnstoffregler GmbH,**
**Enzstrasse 25, D-7014 Kornwestheim (DE)**

(72) Erfinder: **Saur, Roland, Dipl.-Ing., Niersteiner Strasse 43,**
**D-7000 Stuttgart 31 (DE)**
Erfinder: **Bauer, Friedrich, Dipl.-Ing.,**
**Stauffenbergstrasse 2, D-7014 Kornwestheim (DE)**
Erfinder: **Schaper, Rolf, Ing. Grad., Immelmannstrasse 1,**
**D-7257 Ditzingen 1 (DE)**

(74) Vertreter: **Heumann, Christian, Süddeutsche**
**Kühlerfabrik Julius Fr. Behr GmbH & Co. KG**
**Patentabteilung Mauserstrasse 3 Postfach 30 09 20,**
**D-7000 Stuttgart 30 (DE)**

# Beschreibung

Die Erfindung bezieht sich auf einen thermostatisch geregelten Stellantrieb, insbesondere für stationäre Heizungsanlagen, der einen mit einer Schaltuhr zusammenwirkenden Stellmotor umfasst, wobei die Schaltuhr aus elektronischen Bauelementen gebildet und mit einer Datenerfassungseinrichtung verbunden ist, welche zum Einlesen von auf einem Datenträger befindlichen Schaltzeitpunkten vorgesehen ist.

Es ist bereits ein programmierbarer Raumthermostat bekannt, der zur Ansteuerung von Heizungsventilen oder Umwälzpumpen vorgesehen ist. Der Raumthermostat ist dabei als separate Einheit ausgebildet und umfasst eine aus elektronischen Bauelementen gebildete Schaltuhr, der mittels eines Programmkärtchens die entsprechenden Zeitpunkte für die Temperaturabsenkung bzw. Temperaturanhebung eingegeben werden. Hierzu wird das Programmkärtchen an einem im Gehäuse des Raumthermostaten angeordneten Lesekopf vorbeigeführt. Der Raumthermostat ist durch entsprechende Anschlussleitungen mit einem Stellantrieb, der vom Thermostaten entfernt angeordnet ist, verbunden. Bei der bekannten Anordnung ist es daher erforderlich, Steuerleitungen zwischen dem jeweiligen Stellmotor und dem Thermostaten zu verlegen und anzuschliessen, was mit erheblichen Kosten verbunden ist. Ausserdem ist bei dem bekannten Thermostaten nicht sichergestellt, dass die das Programm bildenden Markierungen auf dem Programmkärtchen exakt von der Leseeinrichtung abgetastet werden, so dass ungewollte Falscheingaben auftreten. Ausserdem muss das Programmierkärtchen nach dem ersten Einlesen gedreht und nochmals an der Leseeinrichtung vorbeigeführt werden, was nicht nur umständlich ist, sondern auch die Fehlerrate erhöht.

Es sind ferner Heizkörperthermostatventile bekannt, die mit elektro-mechanischen Schaltuhren zusammenwirken. Dabei ist für jedes Stellglied eine Schaltuhr erforderlich, an der eine begrenzte Anzahl von Schaltzeitpunkten einstellbar ist. Derartige elektro-mechanische Schaltuhren gibt es in verschiedenen Ausführungen mit Tages- oder Wochenprogramm, wobei im Falle eines Wochenprogramms die Zeitauflösung sehr grob und damit die zeitabhängige Temperatursteuerung ungenau ist. Auch bei diesen Anordnungen ist eine Verbindungsleitung zwischen Stellantrieb und Schaltuhr erforderlich, was zu einem zusätzlichen Kostenaufwand führt. Ein weiterer Nachteil dieser bekannten Anordnungen besteht darin, dass bei solchen Schaltuhren nicht die Möglichkeit besteht, mehrere unterschiedliche Programme zu überlagern und wahlweise zur Regelung des Stellantriebes heranzuziehen. Ausserdem sind die bekannten elektro-mechanischen Schaltuhren vergleichsweise teuer, so dass die individuelle Regelung jedes Stellantriebes enorme Investitionskosten voraussetzt.

Es ist daher die Aufgabe der Erfindung, einen thermostatisch geregelten Stellantrieb der im Oberbegriff des Anspruchs 1 bezeichneten Art zu schaffen, bei dem die individuelle Steuerung eines Stellantriebes bei geringem Kostenaufwand und gleichzeitiger Vielfalt von Schaltzeitvorgaben möglich ist.

Diese Aufgabe wird bei einem thermostatisch geregelten Stellantrieb der genannten Gattung durch die kennzeichnenden Merkmale des Anspruchs 1 gelöst.

Die Erfindung ermöglicht die Bestückung jedes Stellantriebes mit einer eigenen Schaltuhr bei minimalem Kostenaufwand. Durch die Integration der Schaltuhr und der Datenerfassungseinrichtung in das Gehäuse des Stellantriebes werden nicht nur zusätzliche Gehäuse eingespart, sondern insbesondere auch Verbindungsleitungen und deren Installation sowie Schaltungsfehler bei der Montage vermieden. Ausserdem kann eine sehr grosse Anzahl von Schaltzeitpunkten bei guter Auflösung des Zeitrasters vorgegeben werden. Die Eingabe der gewünschten Schaltzeiten für die Beeinflussung des Stellmotors ist äusserst einfach. Die Anordnung ist frei von mechanischem Verschleiss und bedarf keinerlei Wartung.

Um sicherzustellen, dass die auf dem Datenträger enthaltenen Angaben in korrekter Weise von dem Lesekopf erfasst werden, ist es zweckmässig, am Gehäuse Mittel zur exakten Führung des Datenträgers gegenüber dem Lesekopf vorzusehen.

Als Datenträger ist beispielsweise eine Programmierscheibe mit einer zentrischen Öffnung geeignet, die auf einem am Gehäuse befindlichen und in einer Ebene mit dem Lesekopf liegenden Zapfen drehbar ist. Die Programmierscheibe ist in mehrfacher Hinsicht von Vorteil, denn es ist für sie nur ein minimaler seitlicher Platzbedarf erforderlich, so dass der Erfindungsgegenstand in den üblichen Verteilanordnungen mit dicht beieinanderliegenden Ventilen ohne weiteres Verwendung finden kann. Ausserdem können durch die Anordnung der Daten auf Kreisbahnen in der Nähe des Scheibenrandes eine grosse Anzahl von Daten bei guter Zeitauflösung auf einer relativ kleinen Scheibe angeordnet werden. Alternativ dazu kann der Datenträger jedoch auch ein Programmierstreifen und das Mittel zur Führung des Streifens ein am Gehäuse befindlicher Vorsprung sein, wobei der Vorsprung im Bezug auf die Bewegungsrichtung des Programmierstreifens eine parallele Anlagefläche aufweist. Vorzugsweise ist zur Führung des Programmierstreifens ein an dem Vorsprung angeordneter Spalt vorgesehen. Die Programmierscheibe bzw. der Programmierstreifen sind so eingestellt, dass alle Daten bei einmaligem Vorbeiführen am Lesekopf eingelesen werden und nicht mehrfaches Einlegen und Einlesen des Datenträgers erforderlich ist.

Gemäss einer bevorzugten Ausführungsform umfasst der Lesekopf mehrere Lichtquellen, und die Eingabedaten auf dem Datenträger sind durch Öffnungen dargestellt. Der Datenträger enthält dabei eine Taktspur mit durchgestanzten Öffnungen und eine oder mehrer Datenspuren mit vorgeprägten und zum Durchstossen vorgesehenen Markierungen. Durch das Durchstossen von Markierungen wird das der Schaltuhr einzugebende Programm erstellt. Durch diese Ausführung des Lesekopfes und des Datenträgers wird erreicht, dass je nach dem, ob sich bei einem Takt, bei dem der im Bereich der Taktspur liegende Fototransistor durchschaltet, in einer Datenspur eine Öffnung befindet oder nicht, die im Bereich der Datenspuren liegenden Fototransistoren durch Lichteinfall angesteuert werden oder nicht.

Um die Programmierung der Schaltuhr zu jeder beliebigen Zeit durchführen zu können, ist auf dem Datenträger ausser den jeweiligen gewünschten Schaltzeitpunkten auch eine entsprechende Angabe des aktuellen Einlesezeitpunktes vorgesehen. Um eine Fehlbedienung völlig auszuschliessen, sind vorzugsweise Markierungen vorgesehen, durch welche die Elektronikeinheit den Beginn eines Programms und die Einleserichtung der Daten erfasst.

Eine bevorzugte Ausgestaltung des Erfindungsgegenstandes besteht darin, dass im Gehäuse ein Schalter mit drei Schaltstellungen vorgesehen ist. Dabei ist eine der Schaltstellungen fur das Abschalten der gesamten Anordnung und eine zweite Schaltstellung für den Automatikbetrieb vorgesehen und eine dritte Schaltstellung dient zur Überbrückung der Schaltautomatik. Zur Anzeige des Betriebszustandes und/oder von Fehlfunktionen ist es zweckmässig, Leuchtanzeigen am Gehäuse vorzusehen. Als Leuchtanzeigen eignen sich insbesondere Leuchtdioden, da sie nur einen geringen Bauraum benötigen und darüber hinaus energiesparend sind.

Der erfindungsgemässe Stellantrieb kann auf einfache Weise durch einen Zweipunktregler mit Sollwerteinstellung erweitert werden. Hierzu ist im Gehäuse ein Einstellpotentiometer vorgesehen, das mit einem angeschlossenen Temperaturfühler zusammenwirkt. Der Temperaturfühler und ein die Signale der Messwerte umformender Analog/Digital-Wandler sind vorzugsweise ebenfalls in dem Gehäuse integriert. Sofern die Temperaturregelung eines Raumes mit grossem Temperaturgefälle erfolgen soll, ist es zweckmässig, den Temperaturfühler extern anzuordnen oder bei einem integrierten Temperaturfühler durch eine entsprechende Voreinstellung dies zu berücksichtigen.

Es ist ausserdem von Vorteil, ein zweites Einstellpotentiometer im Gehäuse anzuordnen, durch das die Anpassung an die Regelstrecke ermöglicht wird. Der Regler ist vorzugsweise so ausgelegt, dass kurzzeitige, extreme Temperaturänderungen auf die Regelung keinen Einfluss nehmen.

Die Erzeugung der Taktfrequenz für die Schaltuhr ist auf verschiedene Weise möglich; sie kann beispielsweise aus der Netzfrequenz der Versorgungsspannung gebildet oder durch die Grundfrequenz eines Quarzes erzeugt werden.

Damit im Falle einer Unterbrechung der Versorgungsspannung oder einer ähnlichen Störung die gespeicherten Programmdaten nicht gelöscht werden, ist es von Vorteil, den Ausfall der Energieversorgung durch einen Puffer zu überbrüken. Diese temporäre Energieversorgung der Elektronikeinheit kann beispielsweise durch eine Batterie oder einen Aku erfolgen, wobei die Batterie bzw. der Aku im Gehäuse integriert ist.

Ausführungsbeispiele eines thermostatisch geregelten Stellantriebes gemäss der Erfindung sind nachstehend anhand der Zeichnung näher erläutert.

In der Zeichnung zeigt:

Figur 1 eine perspektivische Ansicht einer Stellantriebseinheit mit Lesekopf und eingelegter Programmierscheibe,

Figur 2 einen Schnitt nach der Linie II–II in Figur 1,

Figur 3 eine Programmierscheibe,

Figur 4a und b Ausführungsvarianten der Anzeige- und Bedienungselemente,

Figur 5 eine Ausführungsvariante zu Figur 1 mit einem Programmierstreifen.

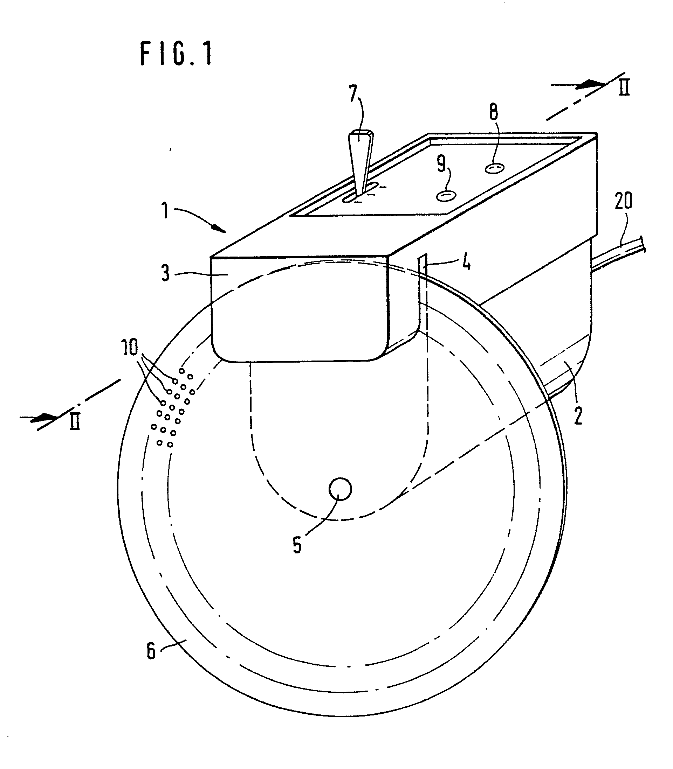

In Figur 1 ist eine Stellantriebseinheit 1 dargestellt, deren Gehäuse 2 auf einer Stirnseite einen Lesekopf 3 aufweist. Zwischen dem Lesekopf 3 und dem Gehäuse 2 ist ein Spalt 4 vorhanden, in den eine Programmierscheibe 6, die auf einem gehäusefesten Zapfen 5 zentriert ist, eingreift. Die Programmierscheibe 6 enthält eine Vielzahl von Markierungen 10, die sämtlich auf einem Radius angeordnet sind, der sich in den Lesekopf 3 erstreckt. Auf die Markierungen 10 wird später noch ausführlich eingegangen.

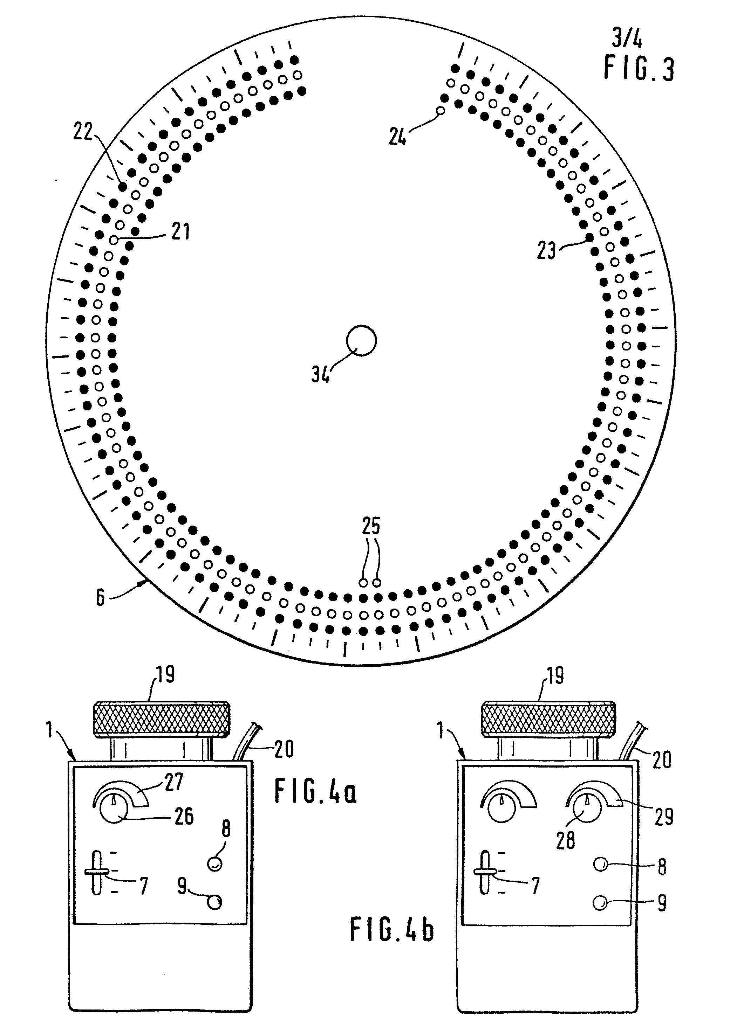

Auf der Oberseite weist das Gehäuse 2 einen Schalter 7 sowie zwei Leuchtanzeigen 8 und 9 auf. Der Schalter 7 umfasst drei Schaltstellungen, nämlich «Aus», «Automatik» und «Ein». Die Funktion des Schalters 7 sowie der Leuchtanzeigen 8 und 9 wird später zu Figur 4a und b beschrieben. Die Stellantriebseinheit 1 besitzt ein Anschlusskabel 20, durch das die Stellantriebseinheit 1 an die Versorgungsspannung, vorzugsweise an ein Netzgerät mit 24 Volt Wechselspannung und 50 Herz, angeschlossen ist.

Derartige Stellantriebseinheiten 1 können in den üblichen Verteileranordnungen mit Ventilgruppen Verwendung finden. Zwar beträgt der Abstand der Mittenachse der Stellantriebe lediglich 50 mm, so dass eine Überdeckung der benachbarten Stellantriebseinheiten 1 durch die Programmierscheibe 6 erfolgt, dies wirkt sich jedoch in keiner Weise negativ aus, da die Markierungen 10 der Programmierscheibe 6 die Leseeinrichtung der benachbarten Stellantriebseinheiten 1 nicht streifen.

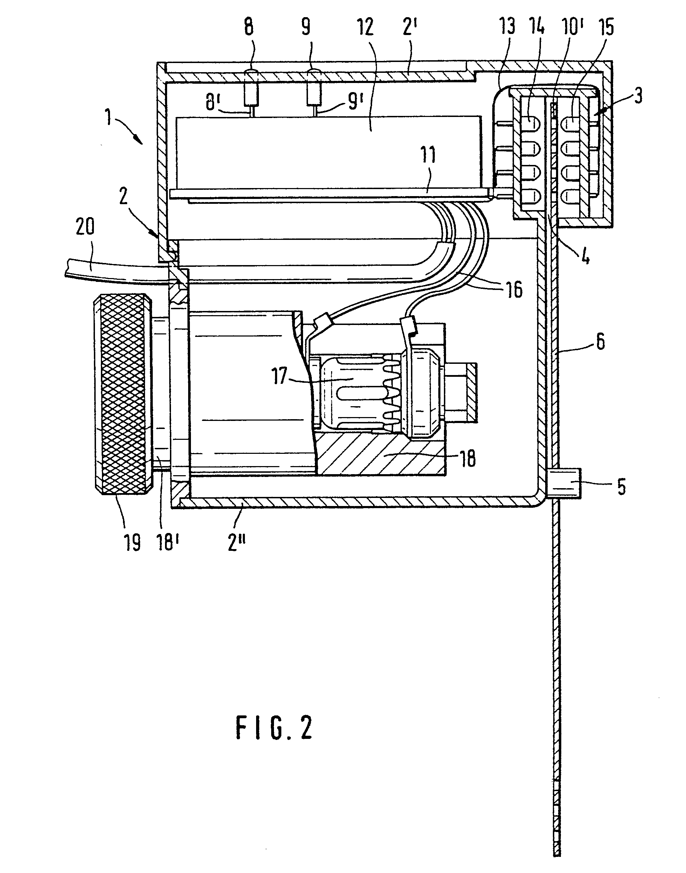

Figur 2 zeigt die Stellantriebseinheit 1 im Schnitt nach der Linie II–II in Figur 1. Das Gehäuse 2 umfasst einen oberen Teil 2' und einen unteren Teil 2'', wobei an letztere der Zapfen 5 angeformt ist. Der obere Teil 2' des Gehäuses 2 weist auf seiner (in Figur 2 gesehen) rechten Seite einen Lesekopf 3 auf; wobei zwischen diesem und dem Gehäuse 2 ein Spalt 4 vorhanden ist. Im oberen Teil 2' des Gehäuses 2 sind die Leuchtanzeigen 8 und 9, die vorzugsweise aus Leuchtdioden bestehen, befestigt und mittels Verbindungsleitungen 8' und 9' mit einer Elektronikeinheit 12, die auf einer Leiterplatte 11 montiert ist, verbunden. Die Elektronikeinheit 12 beinhaltet u.a. einen Mikroprozessor in handelsüblicher Ausführung, der in der Zeichnung nicht näher dargestellt ist. In der Elektronikeinheit 12 ist eine elektronische Schaltuhr verwirklicht, deren Schaltpunkte vom Anwender frei wählbar sind und mittels der Programmierscheibe 6 eingegeben werden.

Auf der der Elektronikeinheit 12 benachbarten Seite des Spaltes 4 sind vier als Lichtquellen dienende Infrarot-Leuchtdioden 14 angeordnet, die im Bezug auf den Zapfen 5 einen unterschiedlichen Abstand aufweisen. Auf der anderen Seite des Spaltes 4 liegen im Lesekopf 3 vier Fototransistoren 15 den Infrarot-Leuchtdioden 14 exakt gegenüber. Die Infrarot-Leuchtdioden 14 und Fototransistoren 15 sind mittels elektrischer Leitungen 13 mit der Elektronikeinheit 12 verbunden. In der Programmierscheibe 6 sind Markierungen 10 in Form von ausgestanzten Öffnungen vorhanden, die in Bezug auf den Zapfen 5 denselben radialen Abstand aufweisen, wie jeweils die Infrarot-Leuchtdioden 14 und Fototransistoren 15. Auf diese Weise wird je nach dem, ob sich eine Öffnung 10' vor der Infrarot-Leuchtdiode 14 befindet oder nicht, der Fototransistor 15 durchgeschaltet bzw. gesperrt. Um einen auf den zugeordneten Fototransistoren 15 gezielt gerichteten Lichtstrahl zu erhalten, können die Lichtquellen 14 und auch die Fototransistoren mit entsprechenden Masken versehen sein.

Im unteren Teil 2'' des Gehäuses 2 befindet sich ein Stellmotor 17 bekannter Bauart, der in einer Halterung 18 befestigt ist. Die Abtriebsseite des Stellmotors befindet sich auf der dem Lesekopf 3 entfernt liegenden Stirnseite des Gehäuses 2. Auf einem aus dem Gehäuse 2 herausragenden Hals 18' der Halterung 18 ist eine Überwurfmutter 19 zur Befestigung der Stellantriebseinheit 1 beispielsweise an einem Heizungsventil angeordnet. Der Stellmotor 17, der im vorliegenden Fall aus einem an sich bekannten Dehnstoffelement besteht, ist mit einem nicht näher bezeichneten Heizwiderstand ausgestattet, der mittels eines Kabels 16 an die Elektronikeinheit angeschlossen ist. Die elektrische Versorgung der Stellantriebseinheit 1 erfolgt über das Anschlusskabel 20.

Figur 3 zeigt die Programmierscheibe 6 aus Figur 1 in vergrösserter Darstellung. Im Zentrum der Programmierscheibe 6 befindet sich eine Öffnung 34, die dazu vorgesehen ist, die Programmierscheibe 6 auf dem Zapfen 5 zentrisch zu lagern. Dem Aussenumfang der Programmierscheibe 6 benachbart, befinden sich auf vier Kreislinien mit unterschiedlichen Radien Markierungen bzw. Öffnungen. In dem Ausführungsbeispiel ist auf der äusseren Kreislinie eine Datenspur mit 96 im gleichen Bogenwinkel aufeinanderfolgenden Markierungen 22 vorgesehen, wobei die Markierungen als vorgeprägte, aber nicht durchstossene Öffnungen ausgebildet sind. Da es sich um 96 Markierungen handelt, entspricht diese Datenspur der Unterteilung der 24 Stunden eines Kalendertages in gleiche Abstände zu je 15 Minuten.

Auf der von aussen gesehen zweiten Kreisbahn befindet sich eine Taktspur 21, die aus einer der Anzahl der maximalen Takte entsprechenden Anordnungen von durchgestanzten Löchern besteht, wobei der Bogenwinkel der Öffnungen in der Taktspur 21 den Markierungen der Datenspur 22 entspricht.

Innerhalb der Taktspur 21 ist eine weitere Datenspur 23 angeordnet, in der ebenfalls 96 gleichmässig angeordnete Markierungen wie in der Datenspur 22 vorgesehen sind. In der Datenspur 23 können beispielsweise die Eingabedaten für den jeweiligen Wochentag und für den Programmierzeitpunkt vorgesehen werden.

Auf einer innerhalb der inneren Datenspur 23 liegenden Kreisbahn befindet sich eine Anfangsmarkierung 24, die ebenfalls wie die Taktspur aus einer durchgestanzten Öffnung besteht. Ausserdem befinden sich auf dieser Kreisbahn zwei durchgestanzte Löcher, die als Drehrichtungsmarkierung 25 vorgesehen sind. Auf diese Weise kann die Programmierscheibe 6 in den Spalt 4 des Lesekopfes 3 eingeführt werden, ohne auf eine bestimmte Lage hinsichtlich des Drehwinkels achten zu müssen, da beim Drehen der Scheibe aufgrund der Anfangsmarkierung 24 der Beginn der Eingabe festgestellt wird. Ebenso ist die Wahl der Drehrichtung völlig gleich, da die Vorrichtungsmarkierung 25 zur Identifizierung der Drehrichtung der Programmierscheibe 6 durch den Mikroprozessor dient. Sofern die vorgesehenen Markierungen in den Datenspuren 22 und 23 nicht ausreichen sollten, können durchaus auf der Kreisbahn, auf der die Anfangsmarkierungen 24 und die Drehrichtungsmarkierung 25 vorgesehen sind, weitere Markierungen für Eingabedaten vorgesehen werden.

Das in Figur 3 dargestellte freie Kreissegment muss nicht vorgesehen sein; die Markierungen können sich ebenso über die gesamte Umfangsfläche erstrecken, da beim Drehen der Programmierscheibe 6 der Mikroprozessor selbständig den Anfang der einzulesenden Daten durch die Anfangsmarkierung 24 erkennt.

Figur 4a zeigt die Draufsicht auf eine Ausführungsvariante der Stellantriebseinheit 1 in Figur 1. Es ist ein Schalter 7 vorgesehen, der drei Schaltstellungen aufweist. In der in Figur 4a gesehenen untersten Stellung «Aus» ist der Stellantrieb abgeschaltet. In der mittleren Schaltstellung «Automatik» ist die entsprechend des eingegebenen Programmes gewünschte Funktion wirksam. In der obersten Schaltstellung «Ein» ist der Heizwiderstand des Stellantriebes dauernd eingeschaltet, so dass die Programmfunktion umgangen wird. Auf diese Weise kann die Umschaltung auf eine zweite Betriebsart für regelmässig wiederkehrende Zeitabschnitte – wie Wochenenden – vorgenommen werden, falls der Mikroprozessor nicht ohnehin mit einem eigenen Wochenendprogramm gespeichert ist.

Die Leuchtanzeige 8, die vorzugsweise aus einer Leuchtdiode besteht, signalisiert durch Blinken den programmlosen Zustand der Anordnung oder eine unkorrekte Eingabe, wobei durch verschiedene Blinkmuster diverse Rückmeldungen an den Anwender möglich sind. Alternativ oder zusätzlich kann der programmlose oder fehlerhafte Zustand auch akustisch, vorzugsweise durch einen piezo-elektrischen Summer, angezeigt werden. Die Leuchtanzeige 9 dient zur Anzeige des jeweiligen Arbeitszustandes des Stellantriebes, d.h. im vorliegenden Fall, die Anzeige leuchtet auf, wenn der Stellantrieb beheizt wird und leuchtet nicht, wenn der Heizwiderstand im Stellantrieb stromlos ist.

Oberhalb des Schalters 7 ist ein Drehknopf 26 eines als Einstellpotentiometer ausgebildeten Sollwertstellers seiner gewünschten Temperatur vorgesehen. Im Bereich der Aussenumfangsfläche des Drehknopfes 26 befindet sich eine gebogene, keilförmige Markierung 27 zur Kennzeichnung eines niedrigeren oder höheren Einstellwertes. Der Sollwertsteller wirkt zusammen mit einem extern angeordneten oder in dem Gehäuse 2 integrierten Temperaturfühler.

Figur 4b zeigt eine ähnliche Anordnung wie Figur 4a, jedoch ist in Figur 4b zusätzlich ein weiterer Drehknopf 28 für ein Einstellpotentiometer vorgesehen. Durch diesen Drehknopf kann der Xp-Bereich zur Anpassung an die Regelstrecke verändert werden. Am Aussenumfang des Drehknopfes 28 ist eine weitere keilförmige Markierung 29 vorgesehen. Der Regler ist so ausgelegt, dass kurzzeitige, extreme Temperaturänderungen ignoriert werden, da diese sonst die Regelung derart beeinflussen, dass eine längere Abweichung von der gewünschten Temperatur erfolgt.

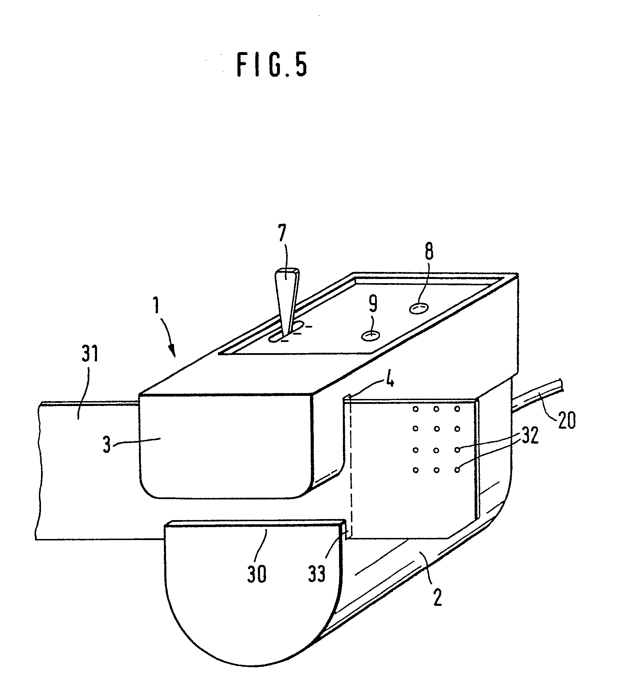

In Figur 5 ist eine Ausführungsvariante zu Figur 1 dargestellt, bei der an Stelle einer Programmierscheibe 6 ein Programmierstreifen 31 Verwendung findet. Der Programmierstreifen 31 besitzt eine Vielzahl von Markierungen 32, die auf vier parallelen Geraden angeordnet sind. Durch die vier parallelen Geraden wird eine Taktspur neben drei Datenspuren gebildet. Zur exakten Führung des Programmierstreifens 31 im Spalt 4 des Lesekopfes 3 ist an der Stirnseite des Gehäuses 2 ein Vorsprung 30 vorhanden, der auf den Lesekopf 3 gerichtet ist und gegenüber dem Gehäuse 3 einen Spalt 33 aufweist. Somit werden die beiden seitlichen Ränder des Programmierstreifens 31 jeweils in einem der Spalte 4 und 33 geführt, so dass die Taktspur und die Datenspuren exakt an den Infrarot-Leuchtdioden und Fototransistoren vorbeigeführt werden.

Wie bereits erwähnt, wird das Schaltprogramm für die elektronische Schaltuhr durch den Anwender selbst erstellt, indem er nach seiner Wahl die entsprechenden Markierungen auf der Programmierscheibe 6 mit einem geeigneten Instrument, beispielsweise einer Nadel, durchstösst. Hierbei können unterschiedliche Programme für einzelne Wochentage nach den jeweiligen Bedürfnissen erstellt werden, insbesondere Werktagsprogramme und Wochenendprogramme.

Die auf diese Weise mit Eingabedaten versehene Programmierscheibe 6 wird mit ihrem Rand in den Spalt 4 geschoben und mit ihrer zentrischen Öffnung 34 auf den Zapfen 5 gesteckt. Dabei ist es völlig gleichgültig, welche Winkellage (bezogen auf den Scheibenumfang) die Programmierscheibe einnimmt, da eine entsprechende Anfangsmarkierung 24 zur Erkennung des Programmbeginns vorhanden ist. Durch Drehung der Programmierscheibe – die Drehrichtung ist dabei wegen der Drehrichtungsmarkierung 25 gleichgültig – bewegen sich die Öffnungen 10' der Taktspur 21 und der Datenspuren 22 und 23 an den Infrarot-Leuchtdioden 14 bzw. den Fototransistoren 15 vorbei.

Die über die einzelnen Datenspuren eingegebenen Informationen werden über einen Adressenzähler, der jeder Information einen Speicherplatz zuordnet, im Arbeitsspeicher abgelegt. Das Programm wird auf seine Plausibilität geprüft, wozu unter anderem die Prüfung auf die jeweilige Drehrichtung der Programmierscheibe oder das doppelte Einlesen von Programmteilen gehört. Eine unlogische Eingabe wird von der Elektronikeinheit 12 ignoriert.

Die Eingabe des Schaltprogrammes mittels eines Programmstreifens entsprechend der Darstellung in Figur 5 erfolgt sinngemäss.

Bezugszahlenliste
1  Stellantriebseinheit
2  Gehäuse
3  Lesekopf, Datenerfassungseinrichtung
4  Spalt
5  Zapfen
6  Programmierscheibe
7  Schalter
8  Leuchtanzeige
9  Leuchtanzeige
10  Markierungen
10'  Loch
11  Leiterplatte
12  Elektronikeinheit
13  elektrische Leitungen
14  Leichtdiode
15  Fototransistor
16  Kabel (elektr. Leitung)
17  Stellmotor (Dehnstoffelement)
18  Halterung
18'  Hals
19  Überwurfmutter
20  Anschlusskabel
21  Taktspur
22  Datenspur
23  Datenspur
24  Anfangsmarkierung
25  Drehrichtungsmarkierung
26  Drehknopf (Sollwertsteller)
27  Markierung
28  Drehknopf
29  Markierung
30  Vorsprung
31  Programmierstreifen
32  Markierung
33  Spalt
34  zentrische Öffnung

**Patentansprüche**

1. Thermostatisch geregelter Stellantrieb, insbesondere für stationäre Heizungsanlagen, der einen mit einer Schaltuhr zusammenwirkenden Stellmotor umfasst, wobei die Schaltuhr aus elektronischen Bauelementen gebildet und mit einer Datenerfassungseinrichtung verbunden ist, welche zum Einlesen von auf einem Datenträger befindlichen Schaltzeitpunkten vorgesehen ist, dadurch gekennzeichnet, dass der Stellmotor (17), die Schaltuhr (Elektronikeinheit 12) und die Datenerfassungseinrichtung, die als Lesekopf (3) ausgebildet ist, in einem gemeinsamen Gehäuse (2) angeordnet sind.

2. Stellantrieb nach Anspruch 1, dadurch gekennzeichnet, dass am Gehäuse (2) Mittel (5, 30) zur exakten Führung des Datenträgers (6, 31) entlang des Lesekopfes (3) vorgesehen sind.

3. Stellantrieb nach Anspruch 2, dadurch gekennzeichnet, dass der Lesekopf (3) und die Mittel (5, 30) zur Führung des Datenträgers (6, 31) an der der Abtriebsseite entfernt liegenden Stirnseite des Gehäuses (2) angeordnet sind.

4. Stellantrieb nach Anspruch 2, dadurch gekennzeichnet, dass der Datenträger eine Programmierscheibe (6) mit einer zentrischen Öffnung (34) und das Mittel zur Führung ein am Gehäuse (2) befindlicher und in einer Ebene mit dem Lesekopf (3) liegender Zapfen (5) ist.

5. Stellantrieb nach Anspruch 2, dadurch gekennzeichnet, dass der Datenträger ein Programmierstreifen (31) und das Mittel zur Führung ein am Gehäuse (2) befindlicher und in einer Ebene mit dem Lesekopf (3) liegender Vorsprung (30) ist, der eine im Bezug auf die Bewegungsrichtung des Programmierstreifens (31) parallele Anlagefläche aufweist.

6. Stellantrieb nach Anspruch 5, dadurch gekennzeichnet, dass zur Führung des Programmierstreifens (31) ein am Vorsprung (30) angeordneter Spalt (33) vorgesehen ist.

7. Stellantrieb nach einem der vorhergehenden Ansprüche, dadurch gekennzeichnet, dass der Lesekopf (3) Lichtquellen (14) und Fototransistoren (15) umfasst und die Eingabedaten auf der Programmierscheibe (6) bzw. dem Programmierstreifen (31) durch Öffnungen (10') dargestellt sind.

8. Stellantrieb nach Anspruch 7, dadurch gekennzeichnet, dass die Programmierscheibe (6) bzw. der Programmierstreifen (31) eine Taktspur (21) mit durchgestanzten Öffnungen (10') und eine oder mehrere Datenspuren (22, 23) mit vorgeprägten und zum Durchstossen vorgesehenen Markierungen (10) aufweist.

9. Stellantrieb nach Anspruch 8, dadurch gekennzeichnet, dass Markierungen (24, 25) vorgesehen sind, durch welche die Elektronikeinheit (12) den Beginn eines Programms und die Einleserichtung der Daten erfasst.

10. Stellantrieb nach einem der Ansprüche 7–9, dadurch gekennzeichnet, dass die Programmierscheibe (6) bzw. der Programmierstreifen (31) ausser den Daten der jeweiligen Schaltzeitpunkte die Daten des aktuellen Einlesezeitpunktes enthält.

11. Stellantrieb nach einem der vorhergehenden Ansprüche, dadurch gekennzeichnet, dass im Gehäuse (2) ein Schalter (7) mit drei Schaltstellungen vorgesehen ist.

12. Stellantrieb nach Anspruch 11, dadurch gekennzeichnet, dass Leuchtanzeigen (8, 9) zur Anzeige des Betriebszustandes und/oder von Fehlfunktionen vorgesehen sind.

13. Stellantrieb nach einem der vorhergehenden Ansprüche, dadurch gekennzeichnet, dass im Gehäuse (2) ein Einstellpotentiometer (Drehknopf 26) vorgesehen ist, das mit einem angeschlossenen Temperaturfühler zusammenwirkt.

14. Stellantrieb nach Anspruch 13, dadurch gekennzeichnet, dass der Temperaturfühler und ein die Signale der Messwerte umformender Analog/Digital-Wandler in dem Gehäuse (2) integriert sind.

15. Stellantrieb nach Anspruch 13 oder 14, dadurch gekennzeichnet, dass ein zweites Einstellpotentiometer (Drehknopf 28) zur Anpassung der Regelcharakteristik vorgesehen ist.

16. Stellantrieb nach einem der Ansprüche 13 bis 15, dadurch gekennzeichnet, dass ein Regler, der kurzzeitige, extreme Temperaturschwankungen unberücksichtigt lässt, vorgesehen ist.

17. Stellantrieb nach Anspruch 7, dadurch gekennzeichnet, dass die Lichtquellen (14) und/oder Fototransistoren (15) mit Masken versehen sind.

18. Stellantrieb nach einem der vorhergehenden Ansprüche, dadurch gekennzeichnet, dass die Taktfrequenz für die Schaltuhr (Elektronikeinheit 12) aus der Netzfrequenz der Versorgungsspannung gebildet oder durch die Grundfrequenz eines Quarzes erzeugt wird.

19. Stellantrieb nach einem der vorhergehenden Ansprüche, dadurch gekennzeichnet, dass im Gehäuse (2) ein zur temporären Leistungsabgabe an die Elektronikeinheit (12) bei Ausfällen der Versorgungsspannung oder Störungen dienender Energiespeicher (Puffer), beispielsweise in Form einer Batterie oder einem Aku, vorgesehen ist.

20. Stellantrieb nach einem der vorhergehenden Ansprüche, dadurch gekennzeichnet, dass der Stellmotor (17) ein an sich bekanntes Dehnstoffelement mit einem Heizwiderstand ist.

**Revendications**

1. Actionneur thermostatique, destiné en particulier à des installations de chauffage stationnaires et comprenant un servomoteur interagissant avec un interrupteur horaire constitué par des composants électroniques et relié à un dispositif de saisie de données pour la lecture d'instants de commutation se trouvant sur un support de données, ledit actionneur étant caractérisé en ce que le servomoteur (17), l'interrupteur horaire (unité électronique 12) et le dispositif de saisie des données, réalisé sous forme d'une tête de lecture (3), sont logés dans un boîtier commun (2).

2. Actionneur selon revendication 1, caractérisé en ce que le boîtier (2) comporte des moyens (5, 30) pour le guidage précis du support de données (6, 31) de long de la tête de lecture (3).

3. Actionneur selon revendication 2, caractérisé en ce que la tête de lecture (3) et les moyens (5, 30) de guidage du support de données (6, 31) sont disposés sur la face frontale du boîtier (2) opposée au côté mené.

4. Actionneur selon revendication 2, caractérisé en ce que le support de données est un disque de programmation (6) avec une ouverture centrale (34) et le moyen de guidage est un tourillon (5) situé sur le boîtier (2), dans le même plan que la tête de lecture (3).

5. Actionneur selon revendication 2, caractérisé en ce que le support de données est une bande de programmation (31) et le moyen de guidage une saillie (30) située sur le boîtier (2) dans le même plan que la tête de lecture (3), et présente une face d'appui parallèle au sens de déplacement de la bande de programmation (31).

6. Actionneur selon revendication 5, caractérisé en ce qu'une fente (33) est prévue sur la saillie (30) pour le guidage de la bande de programmation (31).

7. Actionneur selon une quelconque des revendications 1 à 6, caractérisé en ce que la tête de lecture (3) comprend des sources lumineuses (14) et des phototransistors (15); et les donnés d'entrée sont représentées par des ouvertures sur le disque (6) ou la bande (31) de programmation.

8. Actionneur selon revendication 7, caractérisé en ce que le disque (6) ou la bande de programmation (31) comporte une piste d'horloge (21) à trous (10') et une ou plusieurs pistes de données (22, 23) avec des empreintes de marquages (10) à percer.

9. Actionneur selon revendication 8, caractérisé en ce que des marquages (24, 25) sont prévus, par lesquels l'unité électronique (12) décèle le début d'un programme et le sens de lecture des données.

10. Actionneur selon une quelconque des revendications 7 à 9, caractérisé en ce que le disque (6) ou la bande de programmation (31) comprend les données de l'instant de lecture effectif en plus des données des instants de commutation considérés.

11. Actionneur selon une quelconque des revendications 1 à 10, caractérisé en ce que le boîtier (2) comprend un inverseur (7) à trois positions.

12. Actionneur selon revendication 11, caractérisé par des voyants lumineux (8, 9) indiquant l'état de fonctionnement et/ou des fonctions erronées.

13. Actionneur selon une quelconque des revendications 1 à 12, caractérisé en ce que le boîtier (2) comprend un potentiomètre d'ajustement (bouton 26) interagissant avec une sonde de température raccordée.

14. Actionneur selon revendication 13, caractérisé en ce que la sonde de température et un convertisseur analogique-numérique convertissant les signaux des valeurs mesurées sont intégrés au boîtier (2).

15. Actionneur selon une des revendications 13 ou 14, caractérisé par un second potentiomètre d'ajustement (bouton 28) pour l'adaptation de la caractéristique de régulation.

16. Actionneur selon une quelconque des revendications 13 à 15, caractérisé par un régulateur ne tenant pas compte de brèves fluctuations importantes de température.

17. Actionneur selon revendication 7, caractérisé en ce que les sources lumineuses (14) et/ou les phototransistors (15) sont munis de masques.

18. Actionneur selon une quelconque des revendications 1 à 16, caractérisé en ce que la fréquence d'horloge de l'interrupteur horaire (unité électronique 12) est produite à partir de la fréquence secteur de la tension d'alimentation ou par la fréquence de base d'un quartz.

19. Actionneur selon une quelconque des revendications 1 à 18, caractérisé par un accumulateur d'énergie (tampon), sous forme d'une pile ou d'un accumulateur par exemple, est prévu dans le boîtier (2) pour délivrer temporairement de la puissance à l'unité électronique (12) en cas de défaillance de la tension d'alimentation ou de dérangements.

20. Actionneur selon une quelconque des revendications 1 à 19, caractérisé en ce que le servomoteur (17) est un élément à dilatation connu, avec une résistance de chauffage.

**Claims**

1. Thermostatically controlled positioning drive, particularly for stationary heating installations and comprising a positioning motor which co-operates with a switching clock, the switching clock consisting of electronic component elements and being connected to a data acquisition arrangement adapted to read in switching times located on a data carrier, characterised in that the positioning motor (17), the switching clock (electronic unit 12) and data acquisition arrangement, which is constructed as a reading head (3), are disposed in a common housing (2).

2. Positioning drive according to Claim 1, characterised in that there are on the housing (2) means (5, 30) for accurately guiding the data carrier (6, 31) along the reading head (3).

3. Positioning dirve according to Claim 2, characterised in that the reading head (3) and the means (5, 30) for guiding the data carrier (6, 31) are disposed on the end face of the housing (2) which is remote from the output side.

4. Positioning drive according to Claim 2, characterised in that the data carrier is a programme disc (6) having a central aperture (34) while the guide means is a stud (5) located on the housing (2) and in one plane with the reading head (3).

5. Positioning drive according to Claim 2, characterised in that the data carrier is a programme strip (31) while the guide means is a projection (30) disposed on the housing (2) and in one plane with the reading head (3), the projection (30) having a parallel bearing face in relation to the direction of movement of the programme strip (31).

6. Positioning drive according to Claim 5, characterised in that for guiding the programme strip (31), a gap (33) is provided on the projection (30).

7. Positioning drive according to one of the preceding Claims, characterised in that the reading head (3) comprises light sources (14) and phototransistors (15), and in that the input data on the programme disc (6) or programme strip (31) are represented by apertures (10').

8. Positioning drive according to Claim 7, characterised in that the programme disc (6) or programme strip (31) comprises a timing track (21) having stamped-through apertures (10') and one or a plurality of data tracks (22, 23) with pre-embossed markings (10) which are adapted to be pierced.

9. Positioning drive according to Claim 8, characterised in that markings (24, 25) are provided by which the electronic unit (12) can ascertain the commencement of a programme and the direction of read-in of the data.

10. Positioning drive according to one of Claims 7 to 9, characterised in that the programme disc (6) or programme strip (31) contains not only the data of the relevant switching times but also the data of the current reading-in time.

11. Positioning drive according to one of the preceding Claims, characterised in that there is in the housing (2) a switch (7) having three switch positions.

12. Positioning drive according to Claim 11, characterised in that illuminated displays (8, 9) are provided to indicate the operating condition and/or to indicate malfunctions.

13. Positioning drive according to one of the preceding Claims, characterised in that there is in the housing (2) an adjusting potentiometer (rotary knob 26) which co-operates with the connected temperature sensor.

14. Positioning drive according to Claim 13, characterised in that the temperature sensor and an analogue/digital converter which converts the measured value signals are integrated into the housing (2).

15. Positioning drive according to Claims 13 or 14, characterised in that a second adjusting potentiometer (rotary knob 28) is provided for adapting the control characteristics.

16. Positioning drive according to one of Claims 13 to 15, characterised in that a regulator is provided which disregards brief and extreme temperature fluctuations.

17. Positioning drive according to Claim 7, characterised in that the light sources (14) and/or phototransistors (15) are provided with masques.

18. Positioning drive according to one of the preceding Claims, characterised in that the timing frequency for the switch clock (electronic unit 12) is constituted by the mains frequency of the supply voltage or is generated by the basic frequency of a quartz unit.

19. Positioning drive according to one of the preceding Claims, characterised in that there is in the housing (2) an energy storage means (buffer), for instance in the form of a battery or accumulator, for temporary output of power to the electronic unit (12) upon failure of the supply voltage or in the event of a breakdown.

20. Positioning drive according to one of the preceding Claims, characterised in that the positioning motor (17) is a per se known strain element with a heating resistor.

FIG.1

FIG. 2

FIG.4a

FIG.4b

F I G . 5